# EUROPEAN PATENT SPECIFICATION

(11) **EP 3 716 682 B1**
(45) Date of publication and mention of the grant of the patent: **26.03.2025**
(21) Application number: 20161098.7
(22) Date of filing: 05.03.2020
(51) Int. Cl.: H04W 36/00, H04W 74/04, H04W 36/08, H04W 36/34

(54) **UPDATING CONTENTION FREE RANDOM ACCESS RESOURCES DURING CONDITIONAL HANDOVER**
AKTUALISIERUNG VON KONFLIKTFREIEN DIREKTZUGRIFFSRESSOURCEN WÄHREND EINER BEDINGTEN ÜBERGABE
MISE À JOUR DE RESSOURCES D'ACCÈS ALÉATOIRE SANS CONTENTION LORS D'UN TRANSFERT CONDITIONNEL

(30) Priority: 26.03.2019 US 201962823931 P
(43) Date of publication of application: 30.09.2020
(73) Proprietor: Nokia Technologies Oy, 02610 Espoo (FI)
(72) Inventor: VIERING, Ingo, 81549 Munich (DE); AWADA, Ahmad, 81249 Munich (DE); STANCZAK, Jedrzej, 54107 Wroclaw (PL); KOSKELA, Timo, 90670 Oulu (FI)
(74) Representative: Mudge, Kevin

(56) References cited:
- WO-A1-2018/127264
- WO-A1-2018/175721
- US-A1- 2018 332 520
- QUALCOMM INCORPORATED: "Beam aware RACH procedure and beam refinement during handover", 25 August 2017 (2017-08-25), pages 1 - 3, XP051318883, Retrieved from the Internet <URL:http://www.3gpp.org/ftp/Meetings_3GPP_SYNC/RAN2/Docs/>

## Description

### FIELD:

Some examples may generally relate to mobile or wireless telecommunication systems, such as Long Term Evolution (LTE) or fifth generation (5G) radio access technology or new radio (NR) access technology, or other communications systems. For example, certain examples may relate to systems and/or methods for updating contention free random access (CFRA) resources during conditional handover (CHO).

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

WO 2018/175721 relates to a wireless transmit/receive unit configured to utilize conditional reconfiguration when a trigger condition is met, where a first conditional reconfiguration at the wireless unit may be overwritten with a second conditional reconfiguration sent to the wireless unit by the network.

"Beam aware RACH procedure and beam refinement during handover", Qualcomm Inc., 3GPP Draft, R2-170909, relates to beam aware random access procedures during handover, where a user equipment is able to select a beam for access to a base station which meets a predetermined condition.

WO 2018/127264 relates to beam selection in handover signaling, where a source cell determines whether to hand a UE over to a target cell based on beam quality measurements made by the UE in relation to the target cell.

### SUMMARY

Methods and apparatus are provided for improving CHO. The examples that do not fall under the scope of the claims are to be interpreted as examples useful for understanding the disclosure.

In an aspect, an apparatus is provided according to claim 1.

In another aspect, a method is provided according to claim 7.

The invention relates to a method and apparatus as set forth in the claims. It will be understood that aspects of the disclosure falling within the scope of the claims are part of the invention whereas aspects of the disclosure falling outside the scope of the claims are not part of the invention.

### BRIEF DESCRIPTION OF THE DRAWINGS:

For proper understanding of examples, reference should be made to the accompanying drawings, wherein:
Fig. 1 illustrates an example message sequence diagram depicting CHO, according to one example;
Fig. 2a illustrates an example of 32 beam patterns in a polar diagram, according to an example;
Fig. 2b illustrates an example of the resulting beam layout on the ground, according to an example;
Fig. 3 illustrates an example flow chart of a method, according to one example;
Fig. 4 illustrates an example flow diagram of a method, according to an example;
Fig. 5a illustrates an example flow diagram of a method, according to an example;
Fig. 5b illustrates an example flow diagram of a method, according to an example;
Fig. 5c illustrates an example flow diagram of a method, according to an example;
Fig. 6a illustrates an example block diagram of an apparatus, according to an example; and
Fig. 6b illustrates an example block diagram of an apparatus, according to another example.

### DETAILED DESCRIPTION:

It will be readily understood that the components of certain examples, as generally described and illustrated in the figures herein, may be arranged and designed in a wide variety of different configurations. Thus, the following detailed description of some example of systems, methods, apparatuses, and computer program products for updating contention free random access (CFRA) resources during conditional handover, is is representative of selected examples.

The features, structures, or characteristics of examples described throughout this specification may be combined in any suitable manner in one or more examples. For example, the usage of the phrases "certain examples," "some examples," or other similar language, throughout this specification refers to the fact that a particular feature, structure, or characteristic described in connection with an example may be included in at least one example. Thus, appearances of the phrases "in certain examples," "in some examples," "in other examples," or other similar language, throughout this specification do not necessarily all refer to the same group of examples, and the described features, structures, or characteristics may be combined in any suitable manner in one or more examples.

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain examples, and not in limitation thereof.

It is noted that some examples are described below as being performed by or in a gNB.

However, reference to a gNB or the execution of some examples using a gNB is just one example and examples should not be considered as being limited to just this example. As another, non-limiting example, certain examples may also be applied in other network nodes, such as a base station, access node, access point, node B (NB), evolved NB (eNB), distributed unit, central unit, or the like.

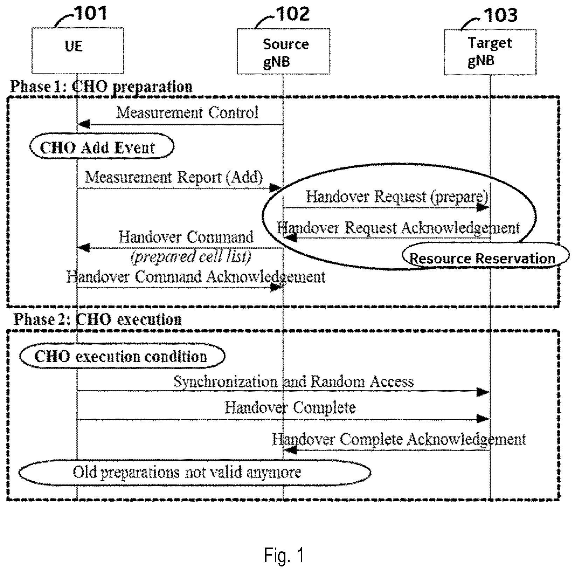

Conditional Handover (CHO) is intended to improve the mobility robustness and is being discussed in two 3GPP work items for mobility enhancements in LTE and NR. Fig. 1 illustrates an example message sequence diagram depicting CHO, according to one example. In the example of Fig. 1, the steps shown as part of "Phase 1" may be similar to the legacy handover (HO). For example, a configured event may trigger the user equipment (UE) 101 to send a measurement report to a source gNB 102. Based on this report, the source gNB 102 may prepare the target gNB 103 for the handover, e.g., via a Handover Request and Handover Request Acknowledgement. The source gNB 102 may then send a handover command to the UE 101. For the legacy HO, the UE would immediately access the target gNB 103 to complete the handover. Instead, for CHO as shown in "Phase 2", the UE may access the target gNB 103 once an additional CHO execution condition is satisfied. The CHO execution condition may be configured, for example, by the source gNB 102 through a HO Command.

An advantage of the CHO is that the HO command can be sent very early, when the UE is still safe in the source cell, without risking the access in and the stability of the target cell. The HO Command may be generated by the target cell and included into the "Handover Request Acknowledgement," before the source cell forwards it to the UE via a radio resource control (RRC) signalling. Among other things, the HO command may include random access parameters, for example "contention free random access" (CFRA) resources, such as dedicated preambles, so that the UE can perform CFRA. Without CFRA resources, the UE would have to perform "contention based random access" (CBRA) which is subject to potential collisions, takes longer, and produces more overhead. This is because, in CBRA, the UE has to be identified in a second step (message 3) with the help of the Cell Radio Network Temporary Identifier (C-RNTI); whereas, in the case of CFRA, the UE is immediately (already in message 1) and uniquely identified by help of the dedicated preamble.

In NR, the cells may use multiple beams to create full coverage. In particular, at high frequencies (e.g., "frequency range 2", "millimetre waves") pathloss and diffraction effects might become critical such that coverage with conventional omni-antennas and conventional power amplifiers cannot be achieved with a decent cell size. Furthermore, even at lower frequency ranges (e.g., "frequency range 1", such as 3.5GHz), coverage may become critical when existing LTE sites are to be reused, and therefore beamforming may be used as well.

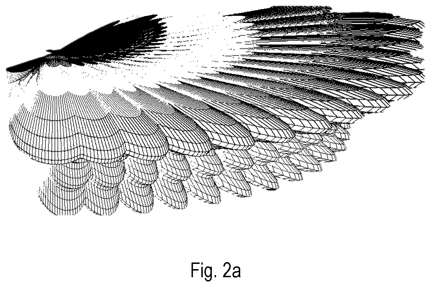

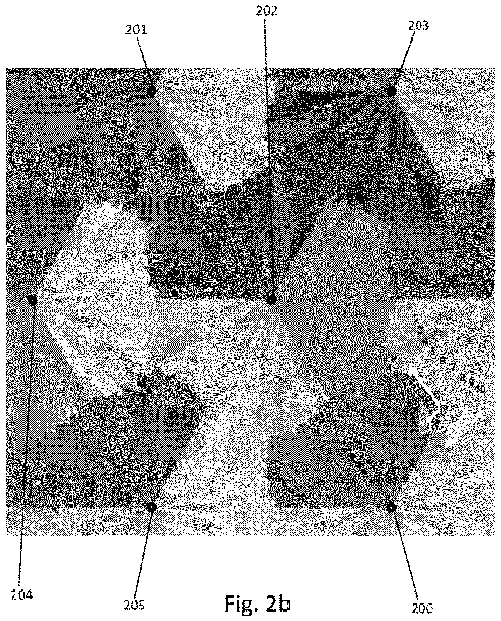

Figs. 2a-2b illustrate an example of how such a beamforming method may work in NR. Fig. 2a illustrates an example of 32 beam patterns in a polar diagram. In the example of Fig. 2a, some narrow beams have a flat tilt in elevation pointing towards the cell edge, some beams broader in elevation have a steeper tilt pointing towards the cell center, and a single beam broad in elevation and azimuth, is pointing very steep to the ground. Fig. 2b illustrates an example of the resulting beam layout on the ground, where the dots 201, 202, 203, 204, 205, 206 denote the base stations and the darker areas indicate the area where a particular beam is the strongest.

As depicted in the example of Fig. 2b, a portion of the beam layout may include beams labeled as 1 through 10. During a handover process, the target cell may reserve CFRA resources only in a single beam, typically the beam associated with the strongest measurement result in the measurement report. As one example, for instance, a preamble that is reserved as a dedicated preamble for a UE expected to show up in beam 6 may be allocated to another beam 5 by the target cell as well. Note that a target cell may also reserve CFRA resources in multiple beams, or even in all beams (and configure this in the HO Command), but this may create significant costs, since those reserved resources cannot be used for idle users (for initial access) or for other users in a legacy handover situation (and potentially beam recovery).

Even for the legacy handover, there is some likelihood that the beam(s), for which the CFRA resource(s) have been reserved, become invalid (e.g., received with weak signal strength/quality) by the time the UE accesses the target cell, since the time gap between the measurement report and the random access can easily be some tens of milliseconds. For the CHO, this time gap may be much larger, since the UE typically sends the measurement report very early and does not access the target cell immediately, but rather after a condition has been met. This may take a much longer time, possibly multiple seconds in a worst case scenario.

In addition to the risk of outdated CFRA beams, another problem in CHO is that the dedicated preambles are reserved for a longer time than with the legacy handover. This increases the problem of shortage on preambles. In other words, for CHO, this makes it even more costly to reserve more than a single CFRA resource for a single UE. On the other hand, for CHO there is a larger risk that the CFRA resources become outdated, so reserving only a single CFRA resource may lead to frequent fallback to CBRA.

In the example of Figs. 2a and 2b, the CHO preparation might be initiated when beam 8 is the strongest in the neighboring target cell (i.e., handover candidate), to make sure that the quality in the source cell is good enough to send the HO Command. CHO may postpone the execution (i.e., the random access) until the target cell is stable enough, which may happen, for example, when the UE has proceeded, e.g., in beam 5.

According to certain examples, it may be assumed that the network has configured a UE for a CHO, for example, from a source cell A to a candidate target cell B (e.g., via HO Command). In an example, the configuration for the UE may include resources for CFRA in the candidate target cell B. According to an example, the resources for CFRA may be coupled to a first set of one or multiple beams in target cell B (these are referred to as "CFRA-beams" in the following). In an example, the UE may send measurement reports to the network, e.g., to source cell A, which indicate that the currently configured CFRA resources are outdated.

Certain examples provide a method for the network to update the CFRA-beams for a UE more efficiently and quickly. According to an example, a target cell may provide a set of CFRA resources (e.g., one or more dedicated preambles associated with a beam) to the source cell. In some examples, the set of CFRA resources may be provided before, after, or along with a HO command. In an example, the set of CFRA resources are not dedicated for a single UE, but are to be used by multiple UEs that are configured to perform a conditional handover from source cell A to target cell B. In some examples, the source cell may administrate the set of resources autonomously, i.e., the source cell can update the CFRA-beams for the UE without involving the target cell.

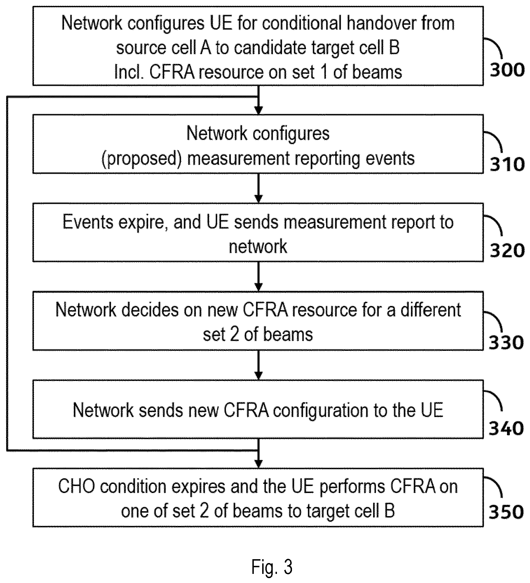

Fig. 3 illustrates an example flow chart of a method, according to one example. As illustrated in the example of Fig. 3, the method may include, at 300, the network configuring the UE for CHO to a candidate target cell B, for example via a HO command. In an example, the configuring 300 may be performed by the source cell, with part of the configured information to the UE being prepared by target cell. In some examples, the configuring 300 may include informing the UE of a set of reserved CFRA resources on a first set of beams, for example via a HO command.

According to one example, along with the handover command or separately afterwards, the method may include, at 310, the network configuring measurement, e.g., configuring a measurement report periodicity or one or more measurement events. At 320, when the condition for measurement reporting is satisfied (e.g., when a measurement event occurs or a timer expires), the method may include the UE sending a measurement report to the network. This measurement report may include the beam-level measurement results. The method may then include, at 330, the network deciding on a new set of CFRA resources on a second set of beams, e.g., according to examples discussed below. At 340, the method may include the network sending the new set of CFRA configuration to the UE. It is noted that further updates might be necessary, for example operations 310, 320, 330 and 340 may be repeated before the CHO is finally executed. The method may include, at 350, the UE performing CFRA when the CHO condition is satisfied (which means that the CHO is finally executed) based on the new set of CFRA resources.

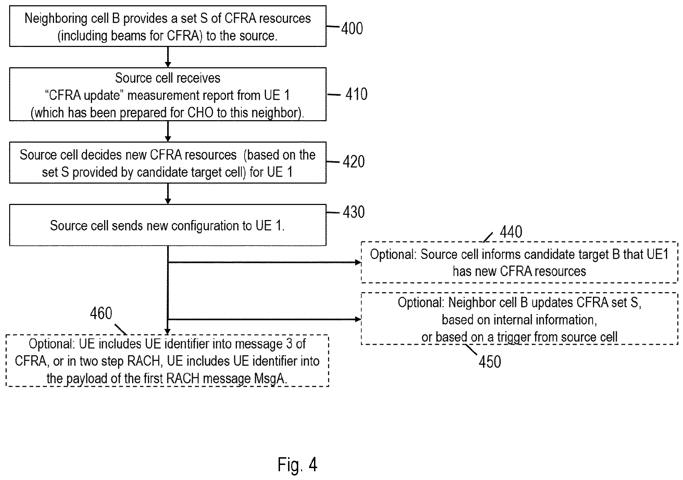

Fig. 4 illustrates an example flow diagram of a method depicting how the network may decide on a new set of CFRA resources on a second set of beams, according to certain examples. As illustrated in the example of Fig. 4, at 400, a neighboring cell B (which may become or which may already be a candidate target cell) provides a set S ("a pool") of CFRA resources including beams for CFRA to the source cell. This allows the source cell to autonomously allocate these CFRA resources to UEs which require a CFRA update. In other words, these CFRA resources are not just assigned to a specific UE. This provision of the set (or pool) of CFRA resources may happen proactively before a CHO is configured for a certain UE, after the CHO is configured for a certain UE, or along with the CHO configuration of a UE (i.e., with the Handover Request Acknowledgement message). In an example, the target neighboring cell may reserve these CFRA resources, i.e., it does not use those resources for other purposes (e.g., HOs from other cells or initial access).

Continuing with the example of Fig. 4, the method may also include, at 410, the source cell receiving a measurement report from a specific UE 1, which has previously been prepared for CHO to this neighboring cell B, i.e., the neighboring cell B is already a candidate target cell for the specific UE 1. This may trigger a CFRA update procedure. Then, at 420, the source cell may autonomously decide on new CFRA resources (and new beams) based on the set S provided by neighboring cell B beforehand, without involving the target cell. At 430, the source cell may send the new configuration to the UE that has sent the "CFRA update" measurement report.

In an example, when the CHO condition is satisfied, the UE 1 may perform a CFRA. The target cell may not identify the UE only based on the dedicated preamble, since this preamble was not assigned uniquely to this UE 1. As examples rather than limitations, some candidate solutions are provided below to achieve all CFRA benefits.

For example, when performing the CFRA, at 460, the UE may attach an identifier (e.g., a C-RNTI received in the HO Command) to message 3 of the CFRA, to enable the identification of the UE by the target cell. Alternatively, in some examples, when a two-step random access channel (RACH) (which may include a MsgA and a MsgB) procedure is used, the UE may optionally include the identifier (e.g., the C-RNTI) in the payload of the first RACH message, MsgA.

In another example, the UE does not have to include its C-RNTI, for example, if it selects and performs random access using a CFRA preamble that was provided directly by the target cell in the handover command. In other words, in this example, the UE would include its identifier (e.g., C-RNTI) only if it performs random access using a CFRA preamble that was updated by the source cell. This would apply for both normal CFRA RACH access and two-step RACH.

In some examples, the UE may be configured as to whether to include its identifier into a RACH message.

In an example option, when the source cell sends the new configuration to the UE, at 440, the source cell may also inform the target cell that the new CFRA resources are assigned to the UE (using again the C-RNTI). This has the additional advantage, that the target can release the reservation of the original CFRA resource.

Furthermore, as another option at 450, it may be advantageous to dynamically update the CFRA resource set S to tailor it to the current traffic condition, and to the currently pending handovers. This can be triggered by the source cell, or by the neighbor target cell B, for example.

In another example, the set S of CFRA resources provided by the neighboring target cell to the source cell may be valid only for a certain time period that can be indicated by the target cell. In this example, after expiry of this time period, the source cell autonomously releases the set S of CFRA resources without being notified by the target cell.

According to some examples, the measurement report from the UE may be triggered, for example, based on one or more of the following: periodic radio resource control (RRC) reports, periodic medium access control (MAC)-level reports (e.g., beam reporting on physical uplink control channel), and/or reports driven by measurement reporting events (e.g., non-CFRA beam becomes offset better than strongest CFRA beam, or number of CFRA beams above certain threshold falls below N). The measurement quantity in the reports and/or the measurement reporting events may include, for example, signal strength, signal quality, or signal-to-interference-plus-noise ratio (SINR). As one non-limiting example, measurement reporting events may include, for instance, when a signal strength and/or signal quality exceeds a threshold.

Examples provide at least the advantage that the update of CFRA resources can be much faster and slimmer, i.e., with less overhead. In addition, examples are able to avoid the race condition that arises in conventional methods. Additionally or alternatively, some examples can save CFRA resources under certain circumstances, compared with configuring multiple CFRA resources for a single CHO.

As one non-limiting example for purposes of illustration, it can be assumed that there are 200 CHOs per minute from cell A to cell B (i.e. a busy boundary) and that, for every CHO, there is 1 sec between the CFRA resource reservation and the final execution of the handover. Using this example, according to conventional methods in order to guarantee CFRA, CFRA resources have to be reserved on, e.g., 5 beams and therefore 200 * 5 * 1sec / 60sec = 17 preambles are allocated permanently.

In contrast, according to examples, a much lower number of CFRA resources can be allocated initially, in the extreme case only 1. With UE-specific updates, the same CFRA benefits can be achieved with only 200*1*1sec / 60sec = 3 preambles allocated permanently. Further, according to examples, the target cell may reserve some additional backup resources on the most "busy" beams (typically, not all the beams are relevant for handover), for example 1 additional CFRA resource on 6 additional beams. Hence, in this example, just 9 preambles need to be allocated permanently. As such, certain examples still maintain the CFRA benefits, but with a slimmer procedure without the aforementioned issues related to signaling overhead, delay and race conditions. It is noted that certain examples can create even more benefits when a cell boundary is very busy and/or if mobility on this cell boundary involves a small number of beams.

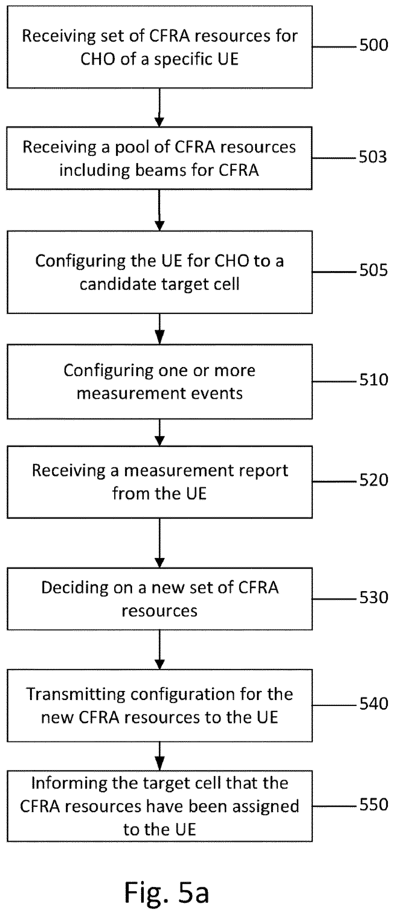

Fig. 5a illustrates an example flow diagram of a method for updating CFRA resources during conditional handover (CHO), according to one example. In certain examples, the flow diagram of Fig. 5a may be performed by a network node serving a cell, such as a base station, node B, eNB, gNB, or any other access node, or one or more servers in a 5GC or cloud configuration, for instance. In one example, for example, the method of Fig. 5a may be performed by a source network node, such as a gNB, which may also be referred to as a source cell. It is noted that the steps of the method depicted in Fig. 5a may be performed in a different order than that shown in this example, according to certain examples.

As illustrated in the example of Fig. 5a, the method may include, at 505, configuring a UE for CHO to a candidate target cell. The configuring 505 may optionally include indicating reserved CFRA resources for the UE on a first set of beams, for example, in a HO command. In an example, the configuring 505 may be performed by the source cell, where part of the configured information to the UE may be prepared by the candidate target cell. Therefore, in some examples, optionally, the method may further include, at 500, the network node receiving at least a part of the configured information, which may include the set of reserved CFRA resources for the UE on the first set of beams, from the candidate target cell.

As further illustrated in the example of Fig. 5a, the method may include, at 503, receiving, from a neighboring cell (which may become or already be a candidate target cell), a pool of CFRA resources including beams for CFRA. In an example, the received pool of CFRA resources are not just assigned for a specific UE, but may be used by a plurality of UEs. In some examples, the receiving 503 of the pool of CFRA resources may occur proactively before a CHO is configured for any UE, after the CHO is configured for the UE, or along with the CHO configuration of the UE (i.e., with the Handover Request Acknowledgement message). In an example, the neighboring cell may reserve the pool of CFRA resources by not using those resources for other purposes.

According to one example, the method may also include, at 510, configuring one or more measurement events. In some examples, the configuring 510 of the measurement event(s) may be done along with the HO command or separately afterwards. The method may further include, at 520, receiving a measurement report from the UE. For example, in an example, the receiving 520 may include receiving the measurement report when or after the measurement event occurs. In an example, the measurement report may include the beam-level measurement results.

According to some examples, the received measurement report from the UE may be triggered, for example, based on periodic radio resource control (RRC) reports, periodic medium access control (MAC)-level reports (e.g., beam reporting on physical uplink control channel), and/or reports driven by measurement reporting events (e.g., non-CFRA beam becomes offset better than strongest CFRA beam, or number of CFRA beams above certain threshold falls below N). The measurement quantity of the reports and/or the measurement reporting events may include, e.g., signal strength, signal quality, or signal-to-interference-plus-noise ratio (SINR).

In an example, the method may then include, at 530, deciding on a new set of CFRA resources on a second set of beams based on the pool of CFRA resources provided by the neighboring cell. According to certain examples, the deciding 530 on the new set of CFRA resources may be triggered by receiving the measurement report at 520 from the UE, which has previously been prepared for CHO to the neighboring cell, i.e., the neighboring cell is already a candidate target cell.

In an example, the deciding 530 on the new set of CFRA resources may include autonomously deciding, by the source cell, on new CFRA resources and possibly new beams based on the pool of CFRA resources provided by the neighboring cell beforehand, without involving the neighboring candidate target cell in the decision on the new set of CFRA resources.

Continuing with Fig. 5a, the method may further include, at 540, sending configuration for the decided new set of CFRA resources to the UE that sent the measurement report.

According to some examples, steps 510, 520, 525, 530 and 540 may be repeated before the CHO is actually executed. In certain examples, the method may also include, at 550, informing the target cell that the new CFRA resources have been assigned to the UE. The target cell may then release the reservation of the original pool of CFRA resources. According to certain examples, as used herein, 'a pool of CFRA resources' may refer to a reservation of a single or multiple CFRA resources.

In one example, the method may include receiving an updated pool of CFRA resources from the target cell, to adapt to the current traffic condition and/or to the currently pending handovers. This dynamic update may be triggered by the source cell or by the neighbor target cell B, for example.

In another example, the pool of CFRA resources provided by the neighboring target cell may be valid only for a certain time period that can be indicated by the target cell. In this example, after expiry of this time duration, the method may include autonomously releasing the pool of CFRA resources without being notified by the target cell.

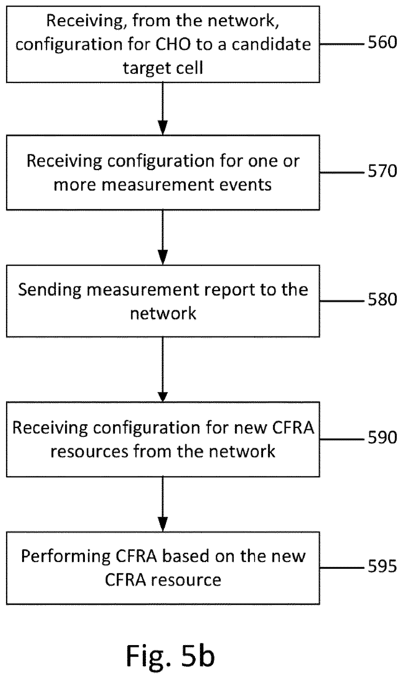

Fig. 5b illustrates an example flow diagram of a method for receiving updated CFRA resources in conjunction with conditional handover (CHO), according to one example. In certain examples, the method of Fig. 5b may be performed by a mobile station, mobile device, UE, IoT device, terminal, or the like, for instance.

As illustrated in the example of Fig. 5b, the method may include, at 560, receiving from the network a configuration for CHO to a candidate target cell. The configuration for CHO may include CFRA resources on a first set of beams in the candidate target cell, for example. In an example, the receiving 560 may include receiving the configuration for CHO in a HO command. According to one example, the method may also include, at 570, receiving a measurement configuration, e.g., a report periodicity or a configuration for one or more measurement events. In some examples, the receiving 570 of the configuration of measurement event(s) may be done along with the HO command or separately afterwards. The method may further include, at 580, sending a measurement report to the network. For example, in an example, the sending 580 may include sending the measurement report when or after the measurement event occurs. In one example, the measurement report may include the beam-level measurement results.

According to some examples, the sending 580 of the measurement report to the network may be triggered, for example, based on periodic radio resource control (RRC) reports, periodic medium access control (MAC)-level reports (e.g., beam reporting on physical uplink control channel), and/or reports driven by measurement reporting events (e.g., non-CFRA beam becomes offset better than strongest CFRA beam, or number of CFRA beams above certain threshold falls below N). The measurement quantity of the reports and/or the measurement reporting events may include, e.g., signal strength, signal quality, or signal-to-interference-plus-noise ratio (SINR).

As also illustrated in the example of Fig. 5b, the method may further include, at 590, receiving a configuration for new CFRA resources from the network. In an example, the method may then include, at 595, performing CFRA based on the new CFRA resource. For example, in one example, the performing 595 may include performing CFRA when the CHO condition is satisfied and/or the CHO is executed.

In some examples, the target cell may not identify the UE based on the dedicated preamble, since this preamble may not be assigned uniquely to the UE. Therefore, in one example, the performing 595 of CFRA may optionally include attaching an identifier (e.g., the C-RNTI received in the HO Command) to message 3 of the CFRA. Alternatively, in an example, a two-step RACH (which may include a MsgA and a MsgB) procedure may be used for CFRA, and the performing 595 of CFRA may optionally include attaching the C-RNTI in the payload of the first RACH message MsgA.

In another example, the performing 595 of CFRA may optionally include selecting and performing random access using a CFRA preamble that was provided directly by the target cell in the HO command, without including an identifier or C-RNTI. In other words, in certain examples, the identifier or C-RNTI may be included if performing random access using CFRA preamble that was updated by the source cell.

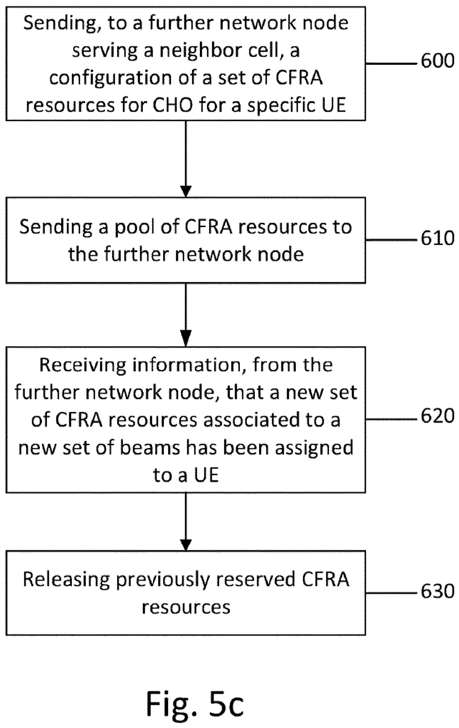

Fig. 5c illustrates an example flow diagram of a method for updating CFRA resources during conditional handover (CHO), according to one example. In certain examples, the flow diagram of Fig. 5c may be performed by a network node serving a cell, such as a base station, node B, eNB, gNB, or any other access node, or one or more servers in a 5GC or cloud configuration, for instance. In one example, for example, the method of Fig. 5c may be performed by a target network node, such as a gNB, which may also be referred to as a target cell.

In an example, the method of Fig. 5c may optionally include, at 600, a network node sending, to a further network node serving a neighbor cell, a configuration of a set of CFRA resources for CHO for a specific UE. In some examples, the network node is a network node serving a target cell or a neighbor cell of the UE, and the further network node is a network node serving the source cell of the UE.

In some examples, alternatively or additionally, the method of Fig. 5c may further include, at 610, the network node sending a pool of CFRA resources to the further network node. In some examples, the pool of CFRA resources is for use by a plurality of UEs served by the further network node for CHO. In some examples, the method may further include, at 620, the network node receiving an information, from the further network node, that a new set of CFRA resources associated to a new set of beams has been assigned to a UE which has previously been prepared for CHO. In a further example, the method may include, at 630, the network node releasing previously reserved CFRA resources.

In some examples, the method may further include the network node receiving a random access message from the UE and identifying the UE based on one of: an identifier of the UE included in the random access message, or a preamble used by the UE.

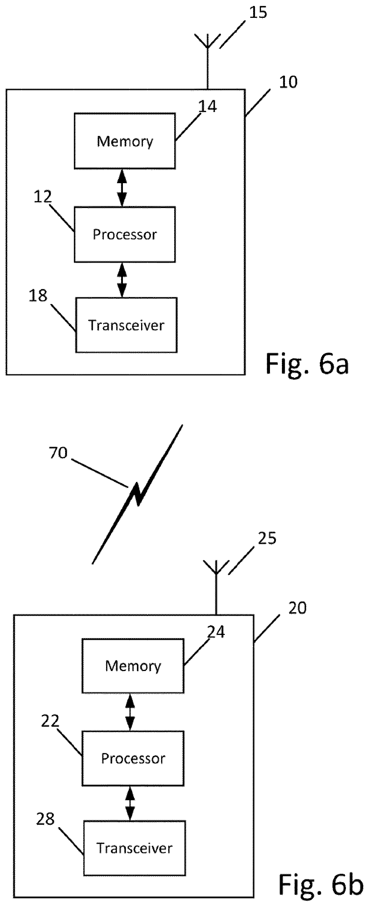

Fig. 6a illustrates an example of an apparatus 10 according to an example. In an example, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In examples, apparatus 10 may be an eNB in LTE or gNB in 5G.

It should be understood that, in some examples, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain examples where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 6a.

As illustrated in the example of Fig. 6a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 6a, multiple processors may be utilized according to other examples. For example, it should be understood that, in certain examples, apparatus 10 may include two or more processors that may form a multiprocessor system (e.g., in this case processor 12 may represent a multiprocessor) that may support multiprocessing. In certain examples, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an example, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some examples, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other examples, transceiver 18 may be capable of transmitting and receiving signals or data directly. Additionally or alternatively, in some examples, apparatus 10 may include an input and/or output device (I/O device).

In an example, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some examples, processor 12 and memory 14 may be included in or may form a part of processing circuitry or control circuitry. In addition, in some examples, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain examples, apparatus 10 may be a network node or RAN node, such as a base station, access point, Node B, eNB, gNB, WLAN access point, or the like. According to certain examples, apparatus 10 may be controlled by memory 14 and processor 12 to perform the functions associated with any of the examples described herein, such as the flow or signaling diagrams illustrated in Figs. 3, 4, 5a or 5c. In some examples, apparatus 10 may be configured to perform a procedure for updating CFRA resources in conjunction with CHO, for example. In an example, apparatus 10 may represent a source network node, such as a gNB, which may also be referred to as a source cell.

For instance, in one example, apparatus 10 may be controlled by memory 14 and processor 12 to configure a UE for CHO to a candidate target cell. The configuring of the UE may optionally include indicating reserved CFRA resources on a first set of beams, for example, in a HO command. In an example, at least a part of the configured information to the UE may be prepared by the candidate target cell. According to some examples, apparatus 10 may be controlled by memory 14 and processor 12 to receive the configured information, which may include the set of reserved CFRA resources for the UE on the first set of beams, prepared by the candidate target cell prior to configuring it to the UE.

According to one example, apparatus 10 may be controlled by memory 14 and processor 12 to configure measurement for the UE, e.g., to configure one or more measurement events. In some examples, the measurement event(s) may be configured along with the HO command or separately afterwards. In an example, apparatus 10 may be controlled by memory 14 and processor 12 to receive a measurement report from the UE. For example, in an example, the measurement report may be received when, or after, the measurement event occurs. In an example, the measurement report may include the beam-level measurement results from the UE.

According to some examples, the measurement report received from the UE may be triggered, for example, based on periodic radio resource control (RRC) reports, periodic medium access control (MAC)-level reports (e.g., beam reporting on physical uplink control channel), and/or reports driven by measurement reporting events (e.g., non-CFRA beam becomes offset better than strongest CFRA beam, or number of CFRA beams above certain threshold falls below N). The measurement quantity of the reports and/or the measurement reporting events may include, e.g., signal strength, signal quality, or signal-to-interference-plus-noise ratio (SINR).

In an example, apparatus 10 may be controlled by memory 14 and processor 12 to receive, from a neighboring cell (which may become or already be a candidate target cell), a pool of CFRA resources including beams for CFRA. In an example, the received pool of CFRA resources are not just assigned for a specific UE. In some examples, the pool of CFRA resources may be received proactively before a CHO is configured for the UE, after the CHO is configured for the UE, or along with the CHO configuration of the UE. In an example, the neighboring cell may reserve the pool of CFRA resources by not using those resources for other purposes.

In an example, apparatus 10 may be controlled by memory 14 and processor 12 to decide on a new set of CFRA resources on a second set of beams, based on the pool of CFRA resources provided by the neighboring cell. According to certain examples, the decision on the new set of CFRA resources may be triggered by receipt of the measurement report from the UE, which has previously been prepared for CHO to the neighboring cell. In an example, apparatus 10 may then be controlled by memory 14 and processor 12 to autonomously decide on the new CFRA resources and possibly new beams based on the pool of CFRA resources provided by the neighboring cell beforehand, without involving the neighboring candidate target cell in the decision on the new CFRA resources.

In certain examples, apparatus 10 may be controlled by memory 14 and processor 12 to transmit configuration for the new CFRA resources to the UE that sent the measurement report. According to some examples, apparatus 10 may be controlled by memory 14 and processor 12 to inform the target cell that the CFRA resources have been assigned to the UE. The target cell may then release the reservation of the original pool of CFRA resources.

In one example, apparatus 10 may be controlled by memory 14 and processor 12 to receive, from the neighboring target cell, a dynamically updated pool of reserved CFRA resources such that the reserved CFRA resources are tailored to the current traffic condition and/or to the currently pending handovers. In some examples, the pool of CFRA resources received from the neighboring target cell may be valid only for a certain time period as indicated by the target cell. In this example, after expiry of this time duration, apparatus 10 may be controlled by memory 14 and processor 12 to autonomously release the pool of CFRA resources without notification from the target cell.

In another example, apparatus 10 may be a network node serving a target cell or a neighbor cell of the UE. In this example, apparatus 10 may be controlled by memory 14 and processor 12 to send, to a further network node serving a neighbor cell, a configuration of a set of CFRA resources for CHO. In some examples, the set of CFRA resources is for use by a plurality of UEs served by the further network node for CHO. In some examples, the further network node is a network node serving the source cell of the UE.

In some examples, apparatus 10 may be further controlled by memory 14 and processor 12 to send an update of the set of CFRA resources to the further network node. In some examples, apparatus 10 may be controlled by memory 14 and processor 12 to receive an information, from the further network node, that a new set of CFRA resources associated to a new set of beams has been assigned to a UE which has previously been prepared for CHO. In a further example, apparatus 10 may be controlled by memory 14 and processor 12 to release previously reserved CFRA resources.

In some examples, apparatus 10 may be controlled by memory 14 and processor 12 to receive a random access message from the UE and identifying the UE based on one of: an identifier of the UE included in the random access message, or a preamble used by the UE.

Fig. 6b illustrates an example of an apparatus 20 according to another example. In an example, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some examples, apparatus 20 may include one or more processors, one or more computer-readable storage medium (for example, memory, storage, or the like), one or more radio access components (for example, a modem, a transceiver, or the like), and/or a user interface. In some examples, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 6b.

As illustrated in the example of Fig. 6b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 6b, multiple processors may be utilized according to other examples. For example, it should be understood that, in certain examples, apparatus 20 may include two or more processors that may form a multiprocessor system (e.g., in this case processor 22 may represent a multiprocessor) that may support multiprocessing. In certain examples, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an example, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some examples, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other examples, transceiver 28 may be capable of transmitting and receiving signals or data directly. Additionally or alternatively, in some examples, apparatus 20 may include an input and/or output device (I/O device). In certain examples, apparatus 20 may further include a user interface, such as a graphical user interface or touchscreen.

In an example, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example, apparatus 20 may optionally be configured to communicate with apparatus 10 via a wireless or wired communications link 70 according to any radio access technology, such as NR.

According to some examples, processor 22 and memory 24 may be included in or may form a part of processing circuitry or control circuitry. In addition, in some examples, transceiver 28 may be included in or may form a part of transceiving circuitry.

As discussed above, according to some examples, apparatus 20 may be a UE, mobile device, mobile station, ME, IoT device and/or NB-IoT device, for example. According to certain examples, apparatus 20 may be controlled by memory 24 and processor 22 to perform the functions associated with examples described herein. For example, in some examples, apparatus 20 may be configured to perform one or more of the processes depicted in any of the flow charts or signaling diagrams described herein, such as those illustrated in Figs. 3, 4, or 5b. In certain examples, apparatus 20 may be configured to perform a procedure for receiving updated CFRA resources in conjunction with CHO, for instance.

According to some examples, apparatus 20 may be controlled by memory 24 and processor 22 to receive from the network a configuration for CHO to a candidate target cell. The configuration for CHO may optionally include CFRA resources on a first set of beams in the candidate target cell, for example. In an example, apparatus 20 may be controlled by memory 24 and processor 22 to receive the configuration for CHO in a HO command. According to one example, apparatus 20 may be controlled by memory 24 and processor 22 to receive a measurement configuration, e.g., a configuration for one or more measurement events. In some examples, the configuration for the measurement event(s) may be received along with the HO command or separately afterwards. In an example, apparatus 20 may be controlled by memory 24 and processor 22 to transmit or send a measurement report to the network. For example, in an example, the measurement report may be sent when, or after, the measurement event occurs. In one example, the measurement report may include the beam-level measurement results.

According to some examples, apparatus 20 may be triggered to send the measurement report to the network, for example, based on periodic radio resource control (RRC) reports, periodic medium access control (MAC)-level reports (e.g., beam reporting on physical uplink control channel), and/or reports driven by measurement reporting events (e.g., non-CFRA beam becomes offset better than strongest CFRA beam, or number of CFRA beams above certain threshold falls below N). The measurement quantity of the reports and/or the measurement reporting events may include, e.g., signal strength, signal quality, or signal-to-interference-plus-noise ratio (SINR).

In an example, apparatus 20 may be controlled by memory 24 and processor 22 to receive a configuration for new CFRA resources from the network. According to one example, apparatus 20 may be further controlled by memory 24 and processor 22 to perform CFRA based on the new CFRA resource. For example, in one example, apparatus 20 may be controlled by memory 24 and processor 22 to perform CFRA when the CHO condition is satisfied and/or the CHO is executed.

In one example, apparatus 20 may be optionally controlled by memory 24 and processor 22 to attach an identifier (e.g., the C-RNTI received in the HO Command) to message 3 of the CFRA. In an example, a two-step RACH (which may include a MsgA and a MsgB) may be used by the apparatus for CHO, and apparatus 20 may be optionally controlled by memory 24 and processor 22 to attach the identifier (e.g., C-RNTI) in the payload of the first RACH message MsgA.

In another example, apparatus 20 may be optionally controlled by memory 24 and processor 22 to select and perform random access using CFRA preamble that was provided directly by the target cell in the HO command, without including an identifier (e.g., C-RNTI). In other words, in some examples, the identifier or C-RNTI may be included if performing random access using CFRA preamble that was updated by the source cell.

Therefore, certain examples provide several technical improvements, enhancements, and/or advantages. For example, one benefit of examples is that the update of CFRA resources can be much faster and more slim, i.e., with less overhead. In addition or alternatively, examples are able to avoid the race condition that arises in conventional methods. Additionally, examples can save CFRA resources under certain circumstances, compared with configuring multiple CFRA resources for a single CHO. Accordingly, the use of certain examples results in improved functioning of communications networks and their nodes.

In some examples, the functionality of any of the methods, processes, signaling diagrams, algorithms or flow charts described herein may be implemented by software and/or computer program code or portions of code stored in memory or other computer readable or tangible media, and executed by a processor.

In some examples, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some examples. The one or more computer-executable components may be at least one software code or portions of code. Modifications and configurations required for implementing functionality of an example may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other examples, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example, the functionality may be implemented as a signal, such as a non-tangible means that can be carried by an electromagnetic signal downloaded from the Internet or other network.

According to an example, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

In a first aspect of the present disclosure, a method that may be implemented by a network node is provided. The method may include the network node configuring a UE for CHO to a candidate target cell. In some examples, the configuration may include one or more CFRA resources associated with a first set of beams which are reserved by a target cell for the UE. In a variant, the configuring of the UE for CHO may include indicating the reserved CFRA resources associated with the first set of beams, for example, in a HO command. In a variant, the configuring of the UE for CHO may be performed by the network node serving the source cell, where part of the configured information (e.g., reserved CFRA resources) to the UE may be prepared by the candidate target cell.

In some examples, the method may further comprise the network node configuring measurements reports for the UE. For example, the network node may configure periodic measurements reports for the UE which requires the UE to report a measurement result periodically. Alternatively or additionally, the network node may configure event triggered measurement report for the UE which requires the UE to report a measurement report when or after a measurement event occurs. According to one example, the method may also include configuring one or more measurement events for the UE. In a variant, the configuring of the measurement event(s) may be performed along with the HO command or separately afterwards.

According to one example, the method may also include the network node receiving an indication of a pool of CFRA resources from a candidate target cell/neighbor cell. In some examples, the CFRA resources are reserved, by the target cell, for a plurality of UEs, rather than dedicated for a single UE. In one example, the method may include the network node receiving, from a neighboring cell, a configuration of the pool of CFRA resources including beams for CFRA. In a variant, the receiving of the configuration of the pool of CFRA resources may occur proactively before a CHO is configured for the UE, after the CHO is configured for the UE, or along with the CHO configuration of the UE. In a variant, the neighboring cell may reserve the pool of CFRA resources by not using those resources for other purposes.

The method may further include receiving a measurement report from the UE. In a variant, the receiving of the measurement report may include receiving the measurement report which is triggered based on the measurement event. The measurement reporting event (also referred to as measurement event) may include, for example but is not limited to, non-CFRA beam becomes better than the strongest CFRA beam by an offset, or the number of CFRA beams above certain threshold (e.g., a receiving signal power threshold) falls below a predefined number N. According to a variant, the receiving of the measurement report from the UE may be triggered periodically, for example, based on periodic radio resource control (RRC) reports, periodic medium access control (MAC)-level reports, or beam reporting on a physical uplink control channel.

In some examples, the measurement report may include beam-level measurement result(s) from the UE. As an example rather than limitation, measurement quantity may include one or more of, e.g., signal strength, signal quality, or signal-to-interference-plus-noise ratio (SINR).

The method may further include deciding on a new set of CFRA resources associated with a second set of beams. The method may further include transmitting configuration for the new set of CFRA resources to the UE. According to a variant, the deciding on the new set of CFRA resources may be triggered by receiving the measurement report from the UE, which has previously been configured for CHO to a target cell.

In a variant, the deciding on the new set of CFRA resources may then include autonomously deciding by the network node on new CFRA resources and possibly new beams based on the pool of CFRA resources previously provided by the neighboring cell.

In a variant, the method may also include informing the target cell that one or more CFRA resources have been assigned to the UE which deviate from the previously assigned CFRA resources.

In another variant, the pool of CFRA resources may be tailored to the current traffic condition and/or to the currently pending handovers dynamically. Correspondingly, the method may further include receiving an update on the pool of CFRA resources from the neighbor cell.

In another variant, the pool of CFRA resources received from the neighboring target cell may be valid only for a certain time period that can be indicated by the target cell or predefined. In a variant, the method may include autonomously releasing the pool of CFRA resources after expiry of this indicated or predefined time period, without being notified by the target cell.

In a second aspect of the present disclosure, another method that may be implemented by a UE is provided. The method may include the UE receiving, from a network node, a configuration for CHO to a candidate target cell. In a variant, the receiving of the configuration for CHO may include receiving the configuration for CHO in a HO command. In some examples, the configuration for CHO may optionally include a set of CFRA resources associated with a first set of beams in a candidate target cell, for example. The method may also include receiving a measurement configuration. In a variant, the measurement event(s) may be received along with the HO command or separately afterwards. In some examples, the measurement configuration may include a configuration for one or more measurement events and/or a reporting periodicity. The method may further include sending a measurement report to the network node. The network node may be a network node serving the source cell of the UE.

In a variant, the sending of the measurement report may include sending the measurement report periodically, or when or after the measurement event occurs. In a variant, the measurement report may include the beam-level measurement results.

According to a variant, the sending of the measurement report to the network node may be triggered periodically, for example, based on periodic radio resource control (RRC) reports, periodic medium access control (MAC)-level reports, or periodic beam reporting on physical uplink control channel. In some examples, the sending of the reports may be driven by measurement reporting events. The measurement reporting event (also referred to as measurement event) may include, but is not limited to, non-CFRA beam becoming better than strongest CFRA beam by an offset, or the number of CFRA beams above certain threshold falling below a predefined number N. In some examples, the measurement report may indicate measurement quantity that may include one or more of, e.g., signal strength, signal quality, or signal-to-interference-plus-noise ratio (SINR).

The method may further include receiving a configuration for a new set CFRA resources from the network node, and performing CFRA based on the new set of CFRA resources.

In one variant, the performing of CFRA may include performing CFRA when the CHO condition is satisfied and/or the CHO is executed.

In another variant, the performing of CFRA may optionally include attaching an identifier of the UE, such as a C-RNTI, to message 3 of the CFRA.

In a variant, a two-step RACH (which may include a MsgA and a MsgB) may be used for CHO, and the performing of CFRA may optionally include attaching the identifier of the UE (e.g., the C-RNTI received in the HO Command) in the payload of the first RACH message ( e.g., MsgA).

In another variant, the performing of CFRA may optionally include using a CFRA resource (e.g., a RACH preamble) that was provided directly by the target cell (e.g., in the HO command) for performing the random access, without including/indicating the identifier of the UE. In other words, the UE may include/indicate its identifier (e.g., the C-RNTI) only if it performs the random access using a CFRA resource (e.g., a preamble) that was updated by the source cell. This would apply to both normal CFRA RACH procedure and two-step RACH procedure. That is, in some examples, the UE may decide whether to indicate its identifier during CFRA based on whether the CFRA resource to be used is different from the one configured by the target cell.

Alternatively, the UE may receive a configuration as to whether the identifier is to be provided during CFRA. This configuration may be received, for example, in a HO command, or via a separate message.

In a third aspect of the present disclosure, still another method that may be implemented by a network node is provided. The method may optionally include the network node sending, to a further network node serving a neighbor cell, a configuration of a set of CFRA resources for CHO for a specific UE.

In some examples, alternatively or additionally, the method may further comprise the network node sending a pool of CFRA resources to the further network node. In some examples, the pool of CFRA resources is for use by a plurality of UEs served by the further network node for CHO.

In some examples, the network node is a network node serving a target cell or a neighbor cell of the UE, and the further network node is a network node serving the source cell of the UE.

In some examples, the method may further comprise the receiving an information from the further network node, that a new set of CFRA resources associated to a new set of beams has been assigned to a UE which has previously been prepared for CHO. In a further example, the network node may release previously reserved CFRA resources.

In some examples, the method may further comprise the receiving a random access message from the UE and identifying the UE based on one of: an identifier of the UE included in the random access message, or a preamble used by the UE.

In a fourth aspect of the present disclosure, an apparatus is provided. The apparatus includes at least one processor and at least one memory comprising computer program code. The at least one memory and computer program code may be configured, with the at least one processor, to cause the apparatus at least to perform the method according to the first, second or third aspect, or any of their variants.

A fifth aspect is directed to an apparatus that may include circuitry configured to perform the method according to the first, second or third aspect, or any of the variants discussed above.

A sixth aspect is directed to an apparatus that may include means for performing the method according to the first, second or third aspect, or any of the variants discussed above.

A seventh aspect is directed to a computer readable medium comprising program instructions stored thereon for performing at least the method according to the first, second or third aspect, or any of the variants discussed above.

One having ordinary skill in the art will readily understand that the examples as discussed above may be practiced with steps in a different order, and/or with hardware elements in configurations which are different than those which are disclosed. Therefore, although some examples have been described based upon these examples, it would be apparent to those of skill in the art that certain modifications, variations, and alternative constructions would be apparent.

## Claims

1. An apparatus (10) comprising means for performing:
receiving, at a source cell from a target cell, an indication of a pool of contention free random access resources;
configuring, by the source cell, a user equipment with a first set of contention free random access resources for conditional handover from the source cell to the target cell, the first set of contention free random access resources being associated with a first set of beams;
receiving, at the source cell, a measurement report from the user equipment;
determining, at the source cell, a second set of contention free random access resources associated with a second set of beams from the received pool of contention free random access resources, the second set being different to the first set; and
configuring, by the source cell, the user equipment with the determined second set of contention free random access resources for the conditional handover from the source cell to the target cell.

2. The Apparatus (10) of Claim 1, further comprising means for performing:
informing the target cell that the second set of contention free random access resources has been assigned to the user equipment.

3. The Apparatus (10) of Claim 1 or 2, further comprising means for performing:
obtaining an indication of the first set of contention free random access resources from the target cell.

4. A system comprising the apparatus (10) of any of claims 1 to 3 and a user equipment comprising means for performing:
receiving, from the source cell, configuration of the first set of contention free random access resources for conditional handover to the target cell, the first set of contention free random access resources being associated with the first set of beams;
transmitting the measurement report to the source cell; and
receiving, from the source cell, the second set of contention free random access resources for conditional handover to the target cell, the second set of contention free random access resources being associated with the second set of beams and being selected from the pool of contention free random access resources indicated by the target cell to the source cell.

5. The system of claim 4, wherein the user equipment further comprises means for performing conditional handover to the target cell based on the second set of contention free random access resources.

6. The system of claim 5, wherein performing conditional handover to the target cell comprises indicating an identifier of the user equipment in a message during contention free random access to the target cell.

7. A method comprising:
receiving (503), at a source cell from a target cell, an indication of a pool of contention free random access resources;
configuring (505), by the source cell, a user equipment (20) with a first set of contention free random access resources for conditional handover from the source cell to the target cell, the first set of contention free random access resources being associated with a first set of beams;
receiving (520), at the source cell, a measurement report from the user equipment (20);
determining (530), at the source cell, a second set of contention free random access resources associated with a second set of beams from the received pool of contention free random access resources, the second set being different to the first set; and
configuring (540), by the source cell, the user equipment (20) with the determined second set of contention free random access resources for the conditional handover from the source cell to the target cell.

8. The method of Claim 7, further comprising:
informing (550,440) the target cell that the second set of contention free random access resources has been assigned to the user equipment (20).

9. The method of Claim 7 or 8, further comprising:
obtaining (500) an indication of the first set of contention free random access resources from the target cell.

10. The method of any of claims 7 to 9, further comprising:
receiving, at the user equipment from the source cell, configuration of the first set of contention free random access resources for conditional handover to the target cell, the first set of contention free random access resources being associated with the first set of beams;
transmitting the measurement report from the user equipment to the source cell; and
receiving, at the user equipment from the source cell, the second set of contention free random access resources for conditional handover to the target cell, the second set of contention free random access resources being associated with the second set of beams and being selected from the pool of contention free random access resources indicated by the target cell to the source cell.

11. The method of claim 10, further comprising:
performing, by the user equipment, conditional handover to the target cell based on the second set of contention free random access resources.

12. The method of claim 11, wherein performing conditional handover to the target cell comprises indicating an identifier of the user equipment in a message during contention free random access to the target cell.

## Patentansprüche

1. Vorrichtung (10), die Mittel zum Durchführen von Folgendem umfasst:
Empfangen einer Anzeige eines Pools von konfliktfreien Direktzugriffsressourcen an einer Quellzelle von einer Zielzelle;
Auslegen einer Teilnehmereinrichtung mit einem ersten Satz von konfliktfreien Direktzugriffsressourcen für eine bedingte Übergabe von der Quellzelle an die Zielzelle durch die Quellzelle, wobei der erste Satz von konfliktfreien Direktzugriffsressourcen mit einem ersten Satz von Strahlen verknüpft ist;
Empfangen eines Messberichts an der Quellzelle von der Teilnehmereinrichtung;
Bestimmen eines zweiten Satzes von konfliktfreien Direktzugriffsressourcen, die mit einem zweiten Satz von Strahlen verknüpft sind, an der Quellzelle aus dem empfangenen Pool von konfliktfreien Direktzugriffsressourcen, wobei sich der zweite Satz vom ersten Satz unterscheidet; und
Auslegen der Teilnehmereinrichtung mit dem bestimmten zweiten Satz von konfliktfreien Direktzugriffsressourcen für die bedingte Übergabe von der Quellzelle an die Zielzelle durch die Quellzelle.

2. Vorrichtung (10) nach Anspruch 1, die ferner Mittel zum Durchführen von Folgendem umfasst:
Informieren der Zielzelle, dass der zweite Satz von konfliktfreien Direktzugriffsressourcen der Teilnehmereinrichtung zugewiesen wurde.

3. Vorrichtung (10) nach Anspruch 1 oder 2, die ferner Mittel zum Durchführen von Folgendem umfasst:
Erhalten einer Anzeige des ersten Satzes von konfliktfreien Direktzugriffsressourcen von der Zielzelle.

4. System, das die Vorrichtung (10) nach einem der Ansprüche 1 bis 3 und eine Teilnehmereinrichtung umfasst, die Mittel zum Durchführen von Folgendem umfasst:
Empfangen einer Auslegung des ersten Satzes von konfliktfreien Direktzugriffsressourcen für eine bedingte Übergabe an die Zielzelle von der Quellzelle, wobei der erste Satz von konfliktfreien Direktzugriffsressourcen mit dem ersten Satz von Strahlen verknüpft ist;
Übertragen des Messberichts zur Quellzelle; und
Empfangen des zweiten Satzes von konfliktfreien Direktzugriffsressourcen für eine bedingte Übergabe an die Zielzelle von der Quellzelle, wobei der zweite Satz von konfliktfreien Direktzugriffsressourcen mit dem zweiten Satz von Strahlen verknüpft ist und aus dem Pool von konfliktfreien Direktzugriffsressourcen, die der Quellzelle von der Zielzelle angezeigt werden, ausgewählt wird.

5. System nach Anspruch 4, wobei die Teilnehmereinrichtung ferner Mittel zum Durchführen einer bedingten Übergabe auf Basis des zweiten Satzes von konfliktfreien Direktzugriffsressourcen an die Zielzelle umfasst.

6. System nach Anspruch 5, wobei das Durchführen einer bedingten Übergabe an die Zielzelle das Anzeigen einer Kennung der Teilnehmereinrichtung während eines konfliktfreien Direktzugriffs in einer Nachricht für die Zielzelle umfasst.

7. Verfahren, das Folgendes umfasst:
Empfangen (503) einer Anzeige eines Pools von konfliktfreien Direktzugriffsressourcen an einer Quellzelle von einer Zielzelle;
Auslegen (505) einer Teilnehmereinrichtung (20) mit einem ersten Satz von konfliktfreien Direktzugriffsressourcen für eine bedingte Übergabe von der Quellzelle an die Zielzelle durch die Quellzelle, wobei der erste Satz von konfliktfreien Direktzugriffsressourcen mit einem ersten Satz von Strahlen verknüpft ist;
Empfangen (520) eines Messberichts an der Quellzelle von der Teilnehmereinrichtung (20);
Bestimmen (530) eines zweiten Satzes von konfliktfreien Direktzugriffsressourcen, die mit einem zweiten Satz von Strahlen verknüpft sind, an der Quellzelle aus dem empfangenen Pool von konfliktfreien Direktzugriffsressourcen, wobei sich der zweite Satz vom ersten Satz unterscheidet; und
Auslegen (540) der Teilnehmereinrichtung (20) mit dem bestimmten zweiten Satz von konfliktfreien Direktzugriffsressourcen für die bedingte Übergabe von der Quellzelle an die Zielzelle durch die Quellzelle.

8. Verfahren nach Anspruch 7, das ferner Folgendes umfasst:
Informieren (550, 440) der Zielzelle, dass der zweite Satz von konfliktfreien Direktzugriffsressourcen der Teilnehmereinrichtung (20) zugewiesen wurde.

9. Verfahren nach Anspruch 7 oder 8, das ferner Folgendes umfasst:
Erhalten (500) einer Anzeige des ersten Satzes von konfliktfreien Direktzugriffsressourcen von der Zielzelle.

10. Verfahren nach einem der Ansprüche 7 bis 9, das ferner Folgendes umfasst:
Empfangen einer Auslegung des ersten Satzes von konfliktfreien Direktzugriffsressourcen für eine bedingte Übergabe an die Zielzelle an der Teilnehmereinrichtung von der Quellzelle, wobei der erste Satz von konfliktfreien Direktzugriffsressourcen mit dem ersten Satz von Strahlen verknüpft ist;
Übertragen des Messberichts von der Teilnehmereinrichtung zur Quellzelle; und
Empfangen des zweiten Satzes von konfliktfreien Direktzugriffsressourcen für eine bedingte Übergabe an die Zielzelle an der Teilnehmereinrichtung von der Quellzelle, wobei der zweite Satz von konfliktfreien Direktzugriffsressourcen mit dem zweiten Satz von Strahlen verknüpft ist und aus dem Pool von konfliktfreien Direktzugriffsressourcen, die der Quellzelle von der Zielzelle angezeigt werden, ausgewählt wird.

11. Verfahren nach Anspruch 10, das ferner Folgendes umfasst:
Durchführen einer bedingten Übergabe durch die Teilnehmereinrichtung auf Basis des zweiten Satzes von konfliktfreien Direktzugriffsressourcen an die Zielzelle.

12. Verfahren nach Anspruch 11, wobei das Durchführen einer bedingten Übergabe an die Zielzelle das Anzeigen einer Kennung der Teilnehmereinrichtung während eines konfliktfreien Direktzugriffs in einer Nachricht für die Zielzelle umfasst.

## Revendications

1. Appareil (10) comprenant des moyens pour effectuer ce qui suit :
recevoir, au niveau d'une cellule source en provenance d'une cellule cible, une indication d'une réserve de ressources d'accès aléatoire sans conflit ;
configurer, par la cellule source, un équipement utilisateur avec un premier ensemble de ressources d'accès aléatoire sans conflit pour un transfert intercellulaire conditionnel de la cellule source à la cellule cible, le premier ensemble de ressources d'accès aléatoire sans conflit étant associé à un premier ensemble de faisceaux ;
recevoir, au niveau de la cellule source, un rapport de mesure en provenance de l'équipement utilisateur ;
déterminer, au niveau de la cellule source, un deuxième ensemble de ressources d'accès aléatoire sans conflit associé à un deuxième ensemble de faisceaux à partir de la réserve de ressources d'accès aléatoire sans conflit reçues, le deuxième ensemble étant différent du premier ensemble ; et
configurer, par la cellule source, l'équipement utilisateur avec le deuxième ensemble de ressources d'accès aléatoire sans conflit déterminé pour le transfert intercellulaire conditionnel de la cellule source à la cellule cible.

2. Appareil (10) selon la revendication 1, comprenant en outre des moyens pour effectuer ce qui suit :
informer la cellule cible que le deuxième ensemble de ressources d'accès aléatoire sans conflit a été attribué à l'équipement utilisateur.

3. Appareil (10) selon la revendication 1 ou 2, comprenant en outre des moyens pour effectuer ce qui suit :
obtenir une indication du premier ensemble de ressources d'accès aléatoire sans conflit à partir de la cellule cible.

4. Système comprenant l'appareil (10) selon l'une des revendications 1 à 3 et un équipement utilisateur comprenant des moyens pour effectuer ce qui suit :
recevoir de la cellule source une configuration du premier ensemble de ressources d'accès aléatoire sans conflit pour un transfert intercellulaire conditionnel à la cellule cible, le premier ensemble de ressources d'accès aléatoire sans conflit étant associé au premier ensemble de faisceaux ;
transmettre le rapport de mesure à la cellule source ; et
recevoir de la cellule source le deuxième ensemble de ressources d'accès aléatoire sans conflit pour un transfert intercellulaire conditionnel à la cellule cible, le deuxième ensemble de ressources d'accès aléatoire sans conflit étant associé au deuxième ensemble de faisceaux et étant sélectionné dans la réserve de ressources d'accès aléatoire sans conflit indiquée par la cellule cible à la cellule source.

5. Système selon la revendication 4, dans lequel l'équipement utilisateur comprend en outre des moyens pour effectuer un transfert intercellulaire conditionnel à la cellule cible sur la base du deuxième ensemble de ressources d'accès aléatoire sans conflit.

6. Système selon la revendication 5, dans lequel la réalisation d'un transfert intercellulaire conditionnel à la cellule cible comprend l'indication d'un identifiant de l'équipement utilisateur dans un message pendant un accès aléatoire sans conflit à la cellule cible.

7. Procédé comprenant les étapes suivantes :
recevoir (503), au niveau d'une cellule source en provenance d'une cellule cible, une indication d'une réserve de ressources d'accès aléatoire sans conflit ;
configurer (505), par la cellule source, un équipement utilisateur (20) avec un premier ensemble de ressources d'accès aléatoire sans conflit pour un transfert intercellulaire conditionnel de la cellule source à la cellule cible, le premier ensemble de ressources d'accès aléatoire sans conflit étant associé à un premier ensemble de faisceaux ;
recevoir (520), au niveau de la cellule source, un rapport de mesure en provenance de l'équipement utilisateur (20) ;
déterminer (530), au niveau de la cellule source, un deuxième ensemble de ressources d'accès aléatoire sans conflit associé à un deuxième ensemble de faisceaux à partir de la réserve de ressources d'accès aléatoire sans conflit reçues, le deuxième ensemble étant différent du premier ensemble ; et
configurer (540), par la cellule source, l'équipement utilisateur (20) avec le deuxième ensemble de ressources d'accès aléatoire sans conflit déterminé pour le transfert intercellulaire conditionnel de la cellule source à la cellule cible.

8. Procédé selon la revendication 7, comprenant en outre l'étape suivante :
informer (550, 440) la cellule cible que le deuxième ensemble de ressources d'accès aléatoire sans conflit a été attribué à l'équipement utilisateur (20).

9. Procédé selon la revendication 7 ou 8, comprenant en outre l'étape suivante :
obtenir (500) une indication du premier ensemble de ressources d'accès aléatoire sans conflit à partir de la cellule cible.

10. Procédé selon l'une des revendications 7 à 9, comprenant en outre les étapes suivantes :
recevoir, au niveau de l'équipement utilisateur en provenance de la cellule source, une configuration du premier ensemble de ressources d'accès aléatoire sans conflit pour un transfert intercellulaire conditionnel à la cellule cible, le premier ensemble de ressources d'accès aléatoire sans conflit étant associé au premier ensemble de faisceaux ;
transmettre le rapport de mesure de l'équipement utilisateur à la cellule source ; et
recevoir, au niveau de l'équipement utilisateur en provenance de la cellule source, le deuxième ensemble de ressources d'accès aléatoire sans conflit pour un transfert intercellulaire conditionnel à la cellule cible, le deuxième ensemble de ressources d'accès aléatoire sans conflit étant associé au deuxième ensemble de faisceaux et étant sélectionné dans la réserve de ressources d'accès aléatoire sans conflit indiquée par la cellule cible à la cellule source.

11. Procédé selon la revendication 10, comprenant en outre l'étape suivante :
réaliser, par l'équipement utilisateur, un transfert intercellulaire conditionnel à la cellule cible sur la base du deuxième ensemble de ressources d'accès aléatoire sans conflit.

12. Procédé selon la revendication 11, dans lequel la réalisation du transfert intercellulaire conditionnel à la cellule cible comprend l'indication d'un identifiant de l'équipement utilisateur dans un message pendant un accès aléatoire sans conflit à la cellule cible.
